# EUROPÄISCHE PATENTANMELDUNG

(11) **EP 1 605 174 A2**
(43) Veröffentlichungstag der Anmeldung: **14.12.2005**
(21) Anmeldenummer: 05012299.3
(22) Anmeldetag: 08.06.2005
(51) Int. Cl.: F16C 29/10

(54) **Elastische Lagerung einer Brems- und Klammeinrichtung**

(30) Priorität: 09.06.2004 DE 102004027984
(71) Anmelder: Zimmer, Günther Stephan, 77866 Rheinau (DE); ZIMMER, Martin Johannes, 77866 Rheinau (DE)
(72) Erfinder: Zimmer, Günther, 77866 Rheinau (DE); Zimmer, Martin, 77866 Rheinau (DE)
(74) Vertreter: Schmid, Rudolf

(57) **Zusammenfassung**

Die Erfindung betrifft eine elastische Lagerung einer Brems- und Klemmeinrichtung zur Anbringung an einem mittels einer Führungsschiene geführten Schlitten, wobei die Brems- und Klemmeinrichtung die Führungsschiene mittels in einem am Schlitten gelagerten Gehäuse angeordneten an der Führungsschiene anpressbaren Reibbacken umgreift. Dazu hat die Brems- und/oder Klemmvorrichtung eine elastische Lagerung, die ein am Schlitten starr montierbares Lagerelement und mindestens ein elastisches am Gehäuse der Brems- und Klemmeinrichtung montierbares Gelenkelement umfasst. Das oder die Gelenkelemente ist oder sind am Lagerelement ohne Trennfuge angeordnet. Der Freiheitsgrad des oder der Gelenkelemente ist oder sind zumindest annähernd quer zur Richtung der Schlittenbewegung orientiert.

Mit der vorliegenden Erfindung wird für eine Brems- und/oder Klemmvorrichtung eine Lagerung entwickelt, die einen einfachen und bauraumsparenden Aufbau hat und zudem dauerhaft wartungsfrei ist.

## Beschreibung

Die Erfindung betrifft eine elastische Lagerung einer Brems- und Klemmeinrichtung zur Anbringung an einem mittels einer Führungsschiene geführten Schlitten, wobei die Brems- und Klemmeinrichtung die Führungsschiene mittels in einem am Schlitten gelagerten Gehäuse angeordneten an der Führungsschiene anpressbaren Reibbacken umgreift.

Aus dem Online-Katalog der Zimmer GmbH, Rheinau-Freistett vom Januar 2004 ist eine Klemmung vom Typ KE der AU-Baureihe (asymmetrische Umgriffsklemmung) bekannt. Hier ist die Brems- und/oder Klemmvorrichtung im Gehäuse schwimmend gelagert. Eine derartige Lagerung ist konstruktiv aufwendig und erfordert zudem eine regelmäßige Wartung.

Der vorliegenden Erfindung liegt die Problemstellung zugrunde, für eine Brems- und/oder Klemmvorrichtung eine Lagerung zu entwickeln, die einen einfachen und bauraumsparenden Aufbau hat und zudem dauerhaft wartungsfrei ist.

Diese Problemstellung wird mit den Merkmalen des Hauptanspruches gelöst. Dazu hat die Brems- und/oder Klemmvorrichtung eine elastische Lagerung, die ein am Schlitten starr montierbares Lagerelement und mindestens ein elastisches am Gehäuse der Brems- und Klemmeinrichtung montierbares Gelenkelement umfasst. Das oder die Gelenkelemente ist oder sind am Lagerelement ohne Trennfuge angeordnet. Der Freiheitsgrad des oder der Gelenkelemente ist oder sind zumindest annähernd quer zur Richtung der Schlittenbewegung orientiert.

Eine derartige elastische Lagerung beinhaltet mindestens ein Gelenkelement in Form eines Biegebalkens. Dieser Biegebalken ist eine Art Blattfeder, die im Gehäuse der Brems- und Klemmeinrichtung integriert oder zumindest dort befestigt ist. Sofern das Gehäuse aus einem duktilen metallischen Werkstoff mit entsprechenden Materialeigenschaften ist, wird der Biegebalken und das entsprechende Lagerelement durch einfaches Umfräsen oder Erodieren erzeugt. Die Bahn des Fräsers oder Erodierdrahtes erzeugt die Form des Biegebalkens und des Lagerelements. Der Biegebalken ist dann nur noch über seinem Fuß mit dem Gehäuse verbunden.

Die so hergestellte elastische Lagerung hat keine über Montagefugen verbundenen Teile. Sie lagert verschmutzungsunempfindlich die Brems- und Klemmeinrichtung wartungsfrei und ohne Schmierstoffbedarf. Die Biegebalken bzw. Biattfedern der Lagerung erdulden ohne Änderung ihrer Gelenkcharakteristik eine hohe Lastwechselzahl. Sie haben somit eine überdurchschnittlich lange Lebensdauer.

Weitere Einzelheiten der Erfindung ergeben sich aus den Unteransprüchen und der nachfolgenden Beschreibung einer schematisch dargestellten Ausführungsform.
- Figur 1:: Dimetrische Ansicht einer Brems- und/oder Klemmvorrichtung mit einem Reibgehemme;
- Figur 2:: Teilquerschnitt zu Figur 1 mit Montagehilfen;
- Figur 3:: Draufsicht zu Figur 1 mit Montagehilfen;
- Figur 4:: Teillängsschnitt zu Figur 1;
- Figur 5:: Parallelogrammgelenk;
- Figur 6:: Trapezgelenk;
- Figur 7:: wie Figur 5, aber mit Biegefederversteifungen;
- Figur 8:: wie Figur 5, aber mit Überlastungssicherung;
- Figur 9:: Doppelparallelogrammgelenk;
- Figur 10:: Doppelparallelogranungelenk, reduziert;
- Figur 11:: Doppelblattfedergelenk;
- Figur 12:: Doppelblattfedergelenk mit Überlastungsschutz.

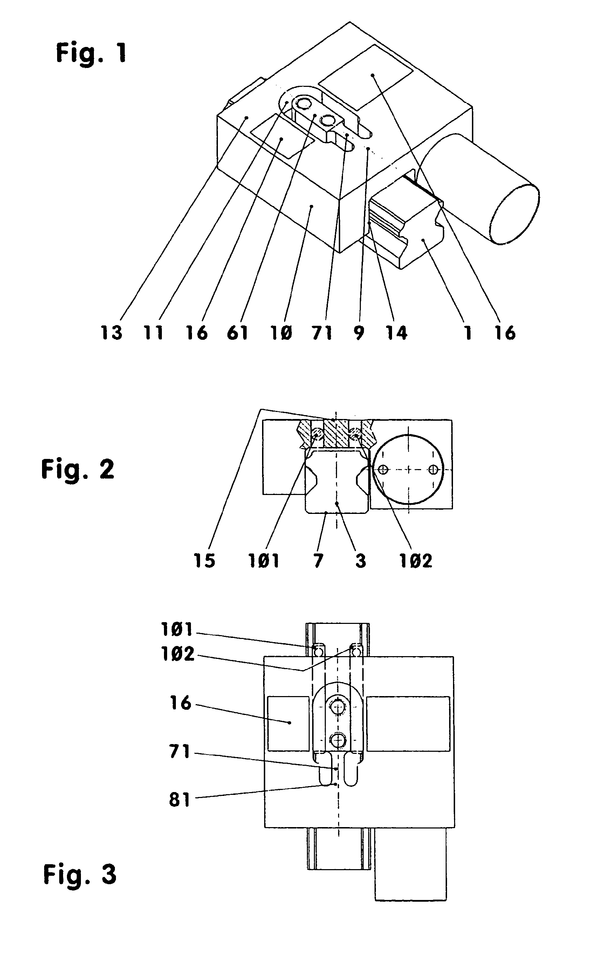

Die Figuren 1 bis 4 zeigen eine Brems- und/oder Klemmvorrichtung mit einer elastischen Lagerung, wie sie beispielsweise in vielen Horizontal- oder Vertikalschlitten u.a. in Werkzeug- und Messmaschinen verwendet wird. Die Vorrichtung der dargestellten Ausführungsform ist hierbei am entsprechenden Geräteschlitten so angeordnet, dass sie die - die Schlittenlängsführung vorgebenden - Führungsschiene (1) mittels eines Reibgehemmes zangenartig umgreift.

Die doppelprismatische Führungsschiene (1) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche (7) z.B. das sie tragende hier nicht dargestellte Maschinenbett.

Die Führungsschiene (1) wird von einem Gehäuse (10) beidseitig umgriffen. Im Gehäuse (10) ist eine die Brems- und Klemmkräfte erzeugende Vorrichtung integriert. Das im Prinzip c-förmige Gehäuse (10) besteht aus einem Quader, der quer zu seiner Längsausdehnung eine Umgriffsnut (14) aufweist, die einen rechteckförmigen Querschnitt hat. In dem durch die Nut (14) entstandenen Freiraum ist die Führungsschiene (1) platziert. Die Nutbreite ist wenige Millimeter breiter als die Führungsschienenbreite in dem vom Gehäuse (10) umgriffenen Bereich. Die Nuttiefe entspricht ca. 85% der Führungsschienenhöhe.

Das Gehäuse (10) hat nach den Figuren 1 und 2 eine rechte Gehäusezone. Diese weist z.B. eine mehrstufige Sacklochbohrung auf, deren Mittellinie (39) parallel zur Führungslängsrichtung (2) orientiert ist. Die Sacklochbohrung setzt sich aus einer Zylinderflächenbohrung (23) und einer Käfigsitzausnehmung (31) zusammen. Im Bereich der Öffnung der Zylinderflächenbohrung (23) befindet sich ein Feingewinde.

Am planen ringflächigen Grund der Zylinderflächenbohrung (23) liegt eine Anschlagscheibe (28), die dort mittels eines Sicherungsrings (29) gehalten wird. Hinter der Anschlagscheibe (28) liegt die Käfigsitzausnehmung (31). Sie erstreckt sich über den gesamten Bereich einer quer zur Stufenbohrung (23, 31) vorhandenen Gehemmebohrung (41). Die Ausnehmung (31) ist z.B. ein Langloch, dessen Breite geringfügig größer ist als die eines dort eingebauten Käfigs (95).

Die quer zur Stufenbohrung (23, 31) verlaufende Gehemmebohrung (41) hat eine Mittellinie (46), die die Mittellinie (39) der Stufenbohrungen kreuzt. Beispielsweise schneidet die Mittellinie (46) die Mittellinie (2) der Führungsschiene (1).

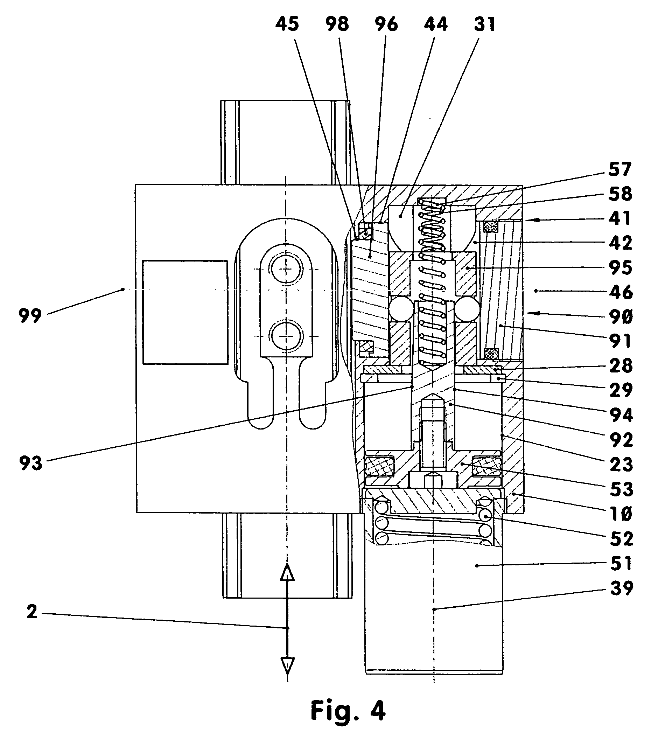

Die Gehemmebohrung (41) hat drei abgestufte Bereiche, vgl. Figur 4. Von der Gehäuseaußenseite her sind das eine Hauptbohrung (42), eine Druckstückführungsbohrung (44) und eine Austrittsbohrung (45). Die Hauptbohrung (42) schneidet sich mit der Käfigsitzausnehmung (31). In diesem Bereich sitzt der Käfig (95), der z.B. zwei Zylinderrollen lagert. Beide Zylinderrollen liegen an einem Schiebekeil (92) eines Schiebekeilgetriebes an. Die außenliegende Zylinderrolle stützt sich an einer Einstellschraube (91) ab, während die innenliegende Zylinderrolle an einem hier unbelasteten Druckstück (96) anliegt.

Im Bereich der Einstellschraube (91) trägt die Hauptbohrung (42) ein Feingewinde. Die Einstellschraube (91) ist eine zylindrische Scheibe, die an der äußeren Stirnfläche Bohrungen für den Eingriff eines Zapfenschlüssels aufweist. Sie hat ein Außengewinde, das in einer Ringnut endet. In der Nut ist ein Quetschring als Schraubensicherung eingelassen.

Das Druckstück (96) ist ein zylindrischer Kolben mit einer angeformten Kolbenstange. Die Kolbenstange ragt bei betätigtem Reibgehemme (90) aus der Austrittsbohrung (45) heraus. Am Übergang der Kolbenstange zum Kolben befindet sich eine Stirnnut, in der ein elastischer Rückhubring (98) mit z.B. rechteckigem Einzelquerschnitt sitzt. Der Rückhubring (98) hält im Normalbetrieb trotz des in der Gehemmebohrung (41) vorhandenen Gasdrucks das Druckstück (96) in seiner hinteren Position.

Vor der außenseitigen Stirnfläche des Druckstückes (96) - hier nicht dargestellt - ist in der Umgriffsnut (14) eine Reibbacke angeordnet. Die Reibbacke ist beispielsweise ein prismatischer Körper, dessen Kontur teilweise mit der Nutkontur der Führungsschiene (1) korrespondiert. Sie ist im Wesentlichen ein langgestreckter Quader, der zur Führungsschiene (1) hin im Bereich deren Führungsflächen je eine entsprechende Schräge aufweist.

Zwischen dem Druckstück (96) und der Einstellschraube (91) ist der Schiebekeil (92) - umgeben von dem Käfig (95) - angeordnet. Der Schiebekeil (92) ist ein trapezförmiger Körper mit z.B. rechteckigen Querschnitten. Er ist starr, z.B. mittels einer Schraube, an einem in der Zylinderflächenbohrung (23) gelagerten Primärkolben (53) befestigt. Der Schiebekeil (92), der auch die Kolbenstange des Primärkolbens (53) darstellt, hat u.a. eine Stütz- (94) und eine Keilfläche (93). Beide Flächen sind rechteckig und z.B. plan. Die dem Druckstück (96) zugewandte Keilfläche (93) schließt mit diesem z.B. einen spitzen Winkel von 1 bis 5 Winkelgraden ein. Die Stützfläche (94) verläuft parallel zur Stirnfläche der benachbarten Einstellschraube (91). Beispielsweise verjüngen sich die Querschnitte des Schiebekeils (92) linear mit zunehmendem Abstand weg von der Kolbenstangenseite des Primärkolbens (53).

In der Stirnseite des freien Endes des Schiebekeils (92) befindet sich eine Sacklochbohrung zur Aufnahme einer - als Demontagehilfe wirkenden - Schraubendruckfeder (57). Letztere stützt sich am Grund der Ausnehmung (31) ab . Nach Figur 4 liegt räumlich unterhalb der Feder (57) eine weitere Schraubendruckfeder (58), die zwischen Käfig (95) und dem Grund der Ausnehmung (31) eingespannt ist. Diese Feder (58) bewirkt den Rückhub des Käfigs (95).

Der den Schiebekeil (92) umgebende Käfig (95) hat eine Querschnittsform, die mit Spiel in die Käfigsitzausnehmung (31) passt. Er hat mittig - parallel zur Führungslängsrichtung - einen rechteckigen Durchbruch, der geringfügig größer ist als der größte Querschnitt des Schiebekeils (92). Quer zu diesem Durchbruch befindet sich außermittig ein ebenfalls rechteckiger Durchbruch. Letzterer dient der Aufnahme der Zylinderrollen.

Im Feingewinde der Zylinderflächenbohrung (23) ist eine Federbüchse (51) eingeschraubt. Die Federbüchse (51), eine dünnwandige zylindrische Büchse mit planem Boden, lagert mindestens ein Federelement (52), z.B. in Form einer Schraubendruckfeder, das mit Vorspannung auf die Kolbenhodenseite des Primärkolbens (53) wirkt. Ggf. kann im Innenraum dieser Feder (52) eine zweite Schraubendruckfeder mit entgegengesetzter Steigung angeordnet sein.

Während des Normalbetriebes des die Vorrichtung tragenden Schlittens liegt am kolbenstangenseitigen Boden des Kolbens (53) Druckluft an. Die am Kolben (53) anliegende Schraubendruckfeder (52) wird unter Spannung gehalten. Der Schiebekeil (92) befindet sich in seiner hinteren Position. Die Zylinderrollen sitzen unbelastet im Käfig (95). Der Rückhubring (98) hat mindestens so viel Vorspannung, dass das Druckstück (96), die Zylinderrollen und der Schiebekeil (92) spielfrei an der Einstellschraube (91) anliegen.

Fällt nun am Kolben (53) die Druckluft ab, unabhängig davon, ob eine Systemstörung vorliegt, ein Bremsvorgang eingeleitet werden soll oder ob nur der Schlitten festgeklemmt oder geparkt werden soll, schiebt die Schraubendruckfeder (52) den Schiebekeil (92) über den Kolben (53) in die Käfigsitzausnehmung (31) hinein. Im Bereich der Gehemmebohrung (41) legen sich mit zunehmendem Schiebekeilhub die Flächen (93, 94) an den im Käfig (95) geführten Zylinderrollen spielfrei an. Die Zylinderrollen wälzen nun zwischen den Bauteilen (91, 92, 96) so lange ab, bis der Reibbacken fest an der Führungsschiene (1) anliegt. Im Bereich der links neben der Führungsschiene gelegenen Gehäusezone hat sich dann ein in der Regel starr ausgelegter Backen ebenfalls angelegt.

Dieser starr im Gehäuse (10) angeordnete Backen kann, z.B. für den Fall, dass die elastische Lagerung als Gelenk nur einen Biegebalken hat, vgl. Figur 1, über einen Schwenkbolzen gelagert sein. Dieser Schwenkbolzen ist im Gehäuse normal zur Darstellungsebene der Figur 4 ausgerichtet, so dass bei einer anfänglichen Schiefstellung des Gehäuses beim Ansprechen der Bremsvorrichtung der schwenkgelagerte Backen keiner Kantenbelastung unterliegt. Er legt sich gleichförmig parallel an der Führungsschiene (1) an. Anstelle des Schwenkbolzens kann auch ein dreiachsiges Gelenk verwendet werden. Eine gelenkige Lagerung kann auch zwischen dem Backen und dem Druckstück (96) angeordnet werden.

Bei den elastischen Lagerungen lassen sich zwei Grundtypen unterscheiden. Der erste Grundtyp ist in den Figuren 1 bis 4 dargestellt. Hier ist das Gelenk der Lagerung ein einfacher Biegebalken (71), der zwischen den relativ zueinander bewegten Teilen (10, 61) angeordnet ist. Er ist in diesen Teilen jeweils fest eingespannt bzw. dort angeformt. Das erste Teil ist nach Figur 1 das Gehäuse (10), während das zweite Teil ein Lagerelement (61) ist. Letzteres hat hier zwei Gewindebohrungen (62), über die es z.B. mittels Schrauben am tragenden Schlitten montiert ist.

Bei einer Auslenkung des Gehäuses (10) gegenüber dem tragenden Schlitten schließt eine in Figur 1 eingezeichnete gedachte Linie (9) - während der Anlegebewegung der Backen - mit der Führungslängsrichtung orientierten Vertikalebene (3) einen spitzen Winkel ein, der sich aufgrund der Biegelinie des Biegebalkens (71) ergibt. Im geklemmten Betriebszustand hat die neutrale Faser des Biegebalkens (71) eine s-förmige Krümmung.

Nach Figur 3 hat der Biegebalken (71) auf seiner gesamten Länge einen rechteckigen Querschnitt. Im Ausführungsbeispiel ist das Gehäuse (10), und somit auch der Biegebalken, aus dem Baustahl 16MnCr5 gefertigt. Seine Gesamtlänge beträgt 8,5 mm, seine taillierte Länge 5,5 mm und seine Blattfederstärke, bzw. seine Ausdehnung quer zur Biegelinie und parallel zur dargestellten Zeichenebene 3 mm. Sein Querschnitt in der taillierten Zone hat eine Fläche von ca. 20 mm².

Bei einer Brems- und/oder Klemmvorrichtung für geringere Bremskräfte oder reine Zugbelastung wird die Querausdehnung des Biegebalkens (61) kleiner dimensioniert. Der Fuß (81) des Biegebalkens (61), also die Anschlussstelle am Gehäuse (10) liegt von der Mittelebene (99) des Reibgehemmes (90) aus betrachtet, vgl. Figur 4, um mindestens die halbe Reibbackenlänge in Führungslängsrichtung (2) versetzt.

Die Querauslenkung dieses Gelenkes (61) liegt beim Ausführungsbeispiel zwischen 0,2 und 0,5 mm.

In den Figuren 2 und 3 sind beidseits des Lagerelements (61) zwei Stifte (101, 102) als Montagehilfen dargestellt. Die Stifte (101, 102) stecken während der Lagerung und des Transports in zwei Gehäusebohrungen, die in die um das Lagerelement (61) herum gelegene Ausfräsung (11) hineinragen. Sie verhindern eine ungewollte Querbeweglichkeit beim Transport und bei der Montage. Nach der Montage werden sie aus dem Gehäuse (10) herausgezogen. Dazu haben die Stifte (101, 102) entsprechende Querbohrungen an ihren außerhalb des Gehäuses (10) gelegenen freien Enden.

Nach den Figuren 1 bis 4 befinden sich auf der Oberfläche (13) des Gehäuses (10), die dem tragenden Schlitten zugewandt ist, mindestens zwei z.B. plane Erhebungen (16) bzw. Abstützflächen, die bei unbelasteter montierter Brems- und/oder Klemmvorrichtung an der Adapterfläche des tragenden Schlittens anliegen. Die Erhebungen (16) sind z.B. aufgeklebte Teflon-Filme oder -Platten. Sie überragen die Oberfläche (13) um das gleiche Maß, wie die Montagefläche Beleuchtungs- und Blinkelemente des Lagerelements (61). Beim Einleiten einer Klemmbewegung stützt sich das Gehäuse (10) über die Teflonfilme gleitfähig am Schlitten ab, so dass u.a. eine koristruktionsbedingte Torsion der Biegefeder (71.) weitgehend vermieden wird. Zugleich wirken die Abstützflächen (16) - besonders beim Entklemmen - in Kombination mit den Anlageflächen am tragenden Schlitten als Schwingungsdämpfer.

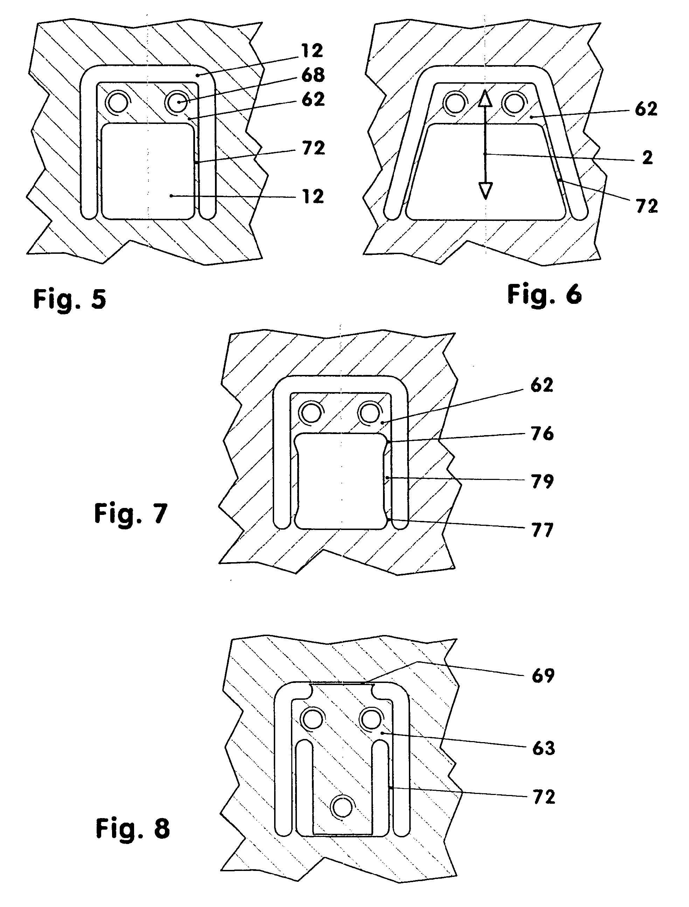

In den Figuren 5 bis 12 sind weitere Varianten elastischer Lagerungen dargestellt. Die Varianten der Figuren 5, 6, 7 und 8 gehören zur Gruppe der einfachen Parallelogrammgelenke. Letztere verbinden das Gehäuse (10) über je zwei z.B. gleichlange, nebeneinander angeordneten Biegefedern (72, 79).

Wird das Gehäuse (10) gegenüber dem Lagerelement (62, 63) ausgelenkt, erzwingen die paarweise angeordneten Biegefedern (72, 79) eine Parallelführung. Hierbei ergibt sich ein geringfügiger Längsversatz im unteren µm-Bereich zwischen dem Gehäuse (10) und dem Lagerelement (62, 63).

In der Variante nach Figur 7 hat jede Biegefeder (79) im Bereich der Einspannungen am Gehäuse (10) und am Lagerelement (62) eine Schwächung zur Ausbildung definierter Gelenkstellen (76, 77) . Zwischen diesen Gelenkstellen (76, 77) ist die Wandstärke der Biegefedern (79) größer als in den Gelenkbereichen. Hierdurch kann die elastische Lagerung - ohne Einschränkung der Gelenkfunktion - große Schubkräfte ohne Knickgefahr für die Biegefedern (79) übertragen.

Die Biegefedern (72) nach Figur 6 bilden ein Trapezgelenk. Sie schließen jeweils mit der Führungslängsrichtung (2) einen spitzen Winkel ein. Beide Winkel sind i.d.R. gleich groß.

Das Lagerelement (63) aus Figur 8 ist in Führungslängsrichtung (2) jeweils so weit verlängert, dass zwischen dem Gehäuse (10) und dem Lagerelement (63) in beide Richtungen nur ein schmaler Spalt (69) vorhanden ist. Sofern das Gehäuse (10) und Lagerelement (63) aus einem Teil bestehen, wird der Spalt (69) beispielsweise durch Erodieren erzeugt. Diese Verlängerungen haben die Funktion eines Überlastschutzes.

Durch den schmalen Spalt (69) kann trotz einem Biegefederbruch die Funktion der Klemm- und Bremsfunktion kurzfristig in einem Notfahrbetrieb aufrecht erhalten werden. Das Lagerelement (63) legt sich nach einem Aufbrauchen der Spaltbreite am Gehäuse (10) an. Ggf. wird der Spalt (69) z.B. zur Realisierung einer Dämpfungswirkung mit Silikon oder einem vergleichbaren Werkstoff befüllt. Auch eine Gleitschicht kann dort ausgebildet werden.

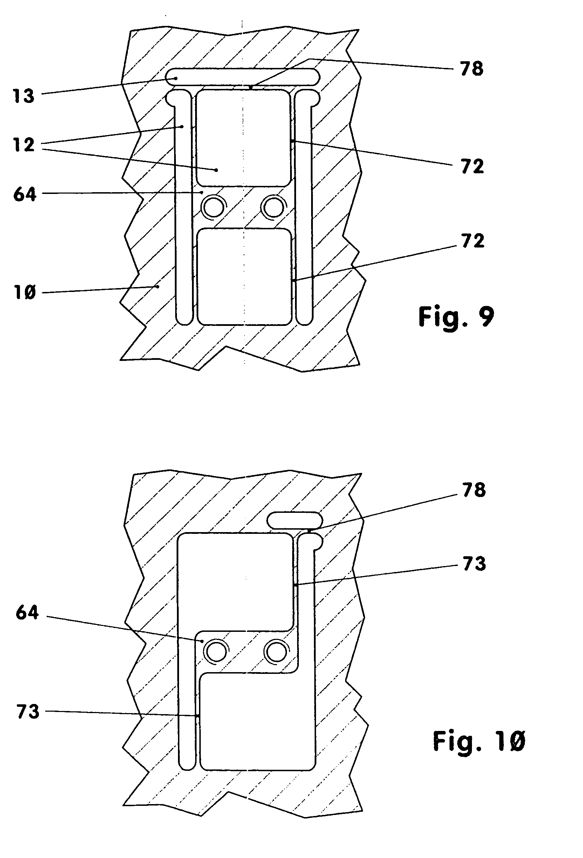

Die Figur 9 zeigt ein Doppelparallelogrammgelenk. Hierbei bilden das Lagerelement (64) und vier Biegefedern (72) zumindest annähernd die Form des Buchstabens "H", d.h. die Biegefedern stehen an den Enden des quer angeordneten Lagerelements (64) in Längsrichtung in beide Bewegungsrichtungen ab. Ggf. fluchten jeweils zwei sich in Längsrichtung gegenüberliegende Biegefedern (72) zueinander. Um die Verkürzung der Biegefedern beim Bremsen und/oder Klemmen auszugleichen, befindet sich im Bereich der oberen Enden der Biegefedern (72) im Gehäuse (10) eine Ausnehmung (13). Letztere liegt gegenüber der Ausnehmungen (12). Die Ausnehmungen (12) und (13) sind durch einen schmalen Biegesteg (78) getrennt. Auf dem Biegesteg (78) enden zwei Biegefedern (72). Der Biegesteg (78) und die Biegefedern haben außerhalb der Übergangsbereiche beispielsweise die gleiche Wandstärke und den gleichen Querschnitt. Die langlochförmigen Ausnehmungen (12) sind in den Endbereichen des Biegestegs (78) quer zur Längsrichtung im Millimeterbereich verlängert, um die Elastizität zu verbessern.

Bei einer Auslenkung des Lagerelements (64) gegenüber dem Gehäuse (10) biegt sich unter Längung der Biegesteg (78) in Richtung des Lagerelements.

Auch hier kann zur Dämpfung Gummi in die Ausnehmung (13) einvulkanisiert sein. Die Ausnehmung kann auch mit einem Thermoplast oder dergleichen gefüllt sein.

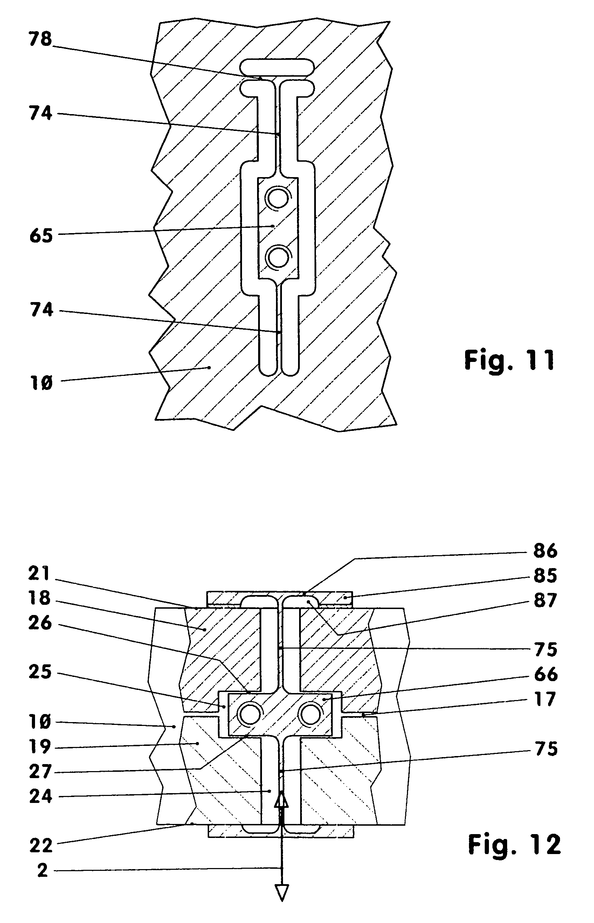

In der in Figur 10 dargestellten Variante sind zwei einander diagonal gegenüber liegende Biegefedern weggelassen. Dadurch kann der Biegesteg (78) kürzer ausgelegt werden.

Die Figur 11 zeigt als Doppelblattfedergelenk eine Lösung, die mit den Lösungen nach den Figuren 1 - 4 vergleichbar ist. Allerdings hat sie nur teilweise den Nachteil der Schrägstellung des Gehäuses (10) während des Klemmvorganges. Das längsausgerichtete Lagerelement (65) ist im Gehäuse (10) zwischen zwei zueinander fluchtenden Biegefedern (74) eingespannt. Eine Biegefeder (74) endet gehäuseseitig an einem - aus der Figur 9 bekannten - Biegesteg (78).

Auch hier sind das Gehäuse (10), Lagerelement (65) und die Biegefedern (74) aus einem Bauteil gefertigt.

Die Figur 12 zeigt dagegen ein montierbares Doppelblattfedergelenk. Hier besteht das Gelenk aus dem z.B. quer angeordneten Lagerelement (66), den beiden Biegefedern (75) und den z.B. ebenfalls quer liegenden Adapterelementen (85). Das hierzu erforderliche Gehäuse (10) umfasst z.B. die aufgeschraubten Teile (18) und (19). Beide Teile haben zumindest im Bereich der Anlage des Doppelblattfedergelenkes jeweils eine außen liegende Stirnfläche (21, 22) und jeweils eine zweite Stirnfläche als Gleitfuge (26) und (27). Die Gleitfugen liegen im Bereich der zwischen den Teilen (18) und (19) liegenden Aussparung (25). Die Gehäuseteile (18) und (19) müssen sich im Bereich in Figur 12 eingezeichneten Trenn- bzw. Einstellfuge (17) nicht berühren.

Die Gehäuseteile (18, 19) haben z.B. jeweils eine kanal- oder rinnenartige Ausnehmung (24), in der sich das Doppelbiegefederelement frei bewegen kann. Das Doppelbiegefederelement ist in den Gehäuseteilen (18, 19) so eingesetzt, dass die Adapterelemente (85) an den Stirnseiten (21) und (22) anliegen. Die Adapterelemente (85) sind dort verschraubt. Das Lagerelement (66) sitzt - in Führungslängsrichtung gesehen - nahezu spielfrei zwischen den Gleitfugen (26, 27) der Aussparung (25). Über diese Gleitfugen (26, 27) werden beim Bremsen und/oder Klemmen die entsprechenden Zug- oder Druckkräfte direkt in die Gehäuseteile (18, 19) eingeleitet. Die Biegefedern (75) übertragen aufgrund der in den Adapterelementen (85) integrierten Biegestege (86) keinen oder nur einen geringen Teil der wirkenden Kräfte. Ggf. ist das Doppelbiegefederelement so dimensioniert, dass in allen regulären Betriebssituationen die Biegefedern (75) auf Zug und die Biegestege (86) auf Biegung belastet sind. Zur Einstellung des Doppelbiegefederelements können zwischen den Adapterelementen (85) und den jeweiligen Gehäuseteilen (18, 19) auch Distanzplättchen eingelegt sein.

Bei allen Gelenken der Figuren 5, 7 - 9 können die neutralen Phasen der Biegefedern (72, 79) im unbelasteten Zustand zur Längsrichtung einen spitzen Winkel einschließen.

Alle Endbereiche der Biegefedern sind in der Regel zur Vermeidung von größeren Kerbspannungen ausgerundet. Die dort vorhandenen Querschnitte ändern sich in den Fußbereichen kontinuierlich. Ggf. sind Biegefedern in den Fußbereichen poliert.

### Bezugszeichenliste:

- 1: Führungsschiene, doppeltrapezförmig
- 2: Führungslängsrichtung, Mittellinie; Schlittenbewegung
- 3: vertikale Mittelebene, Vertikalebene

- 7: Bodenfläche
- 9: gedachte Linie

- 10: Gehäuse
- 11: Ausfräsung
- 12: Ausfräsung für Biegesteg
- 13: Oberfläche
- 14: Umgriffsnut
- 15: Montagefläche
- 16: Abstützfläche, Erhebung
- 17: Trenn- und Einstellfuge
- 18: Gehäuseteil
- 19: Gehäuseteil

- 21: Stirnfläche
- 22: Stirnfläche
- 23: Zylinderflächenbohrung, Sacklochbohrung
- 24: Kanal
- 25: Aussparung
- 26: Gleitfuge
- 27: Gleitfuge
- 28: Anschlagscheibe
- 29: Sicherungsring

- 31: Käfigsitzausnehmung, Ausnehmung, Sacklochbohrung

- 39: Mittellinie

- 41: Gehemmebohrung
- 42: Hauptbohrung
- 44: Druckstückführungsbohrung
- 45: Austrittsbohrung
- 46: Mittellinie

- 51: Federbüchse
- 52: Federelement, Schraubendruckfeder, Feder
- 53: Primärkolben
- 57: Federelement, Schraubendruckfeder
- 58: Federelement, Schraubendruckfeder

- 61: Lagerelement, längs
- 62: Lagerelement, quer
- 63: Lagerelement mit Anschlag, quer
- 64: Lagerelement, quer
- 65: Lagerelement, längs
- 66: Lagerelement, längs,

- 68: Gewindebohrung
- 69: Spalt

- 71: Biegebalken, -feder; Gelenkelement, Blattfedergelenk
- 72: Biegebalken, -feder; Gelenkelement, Blattfedergelenk
- 73: Biegebalken, -feder, Gelenkelement, Blattfedergelenk
- 74: Biegebalken, -feder, Gelenkelement, Blattfedergelenk
- 75: Biegebalken, -feder, Gelenkelement, Blattfedergelenk
- 76: Gelenkstellen, definiert
- 77: Gelenkstellen, definiert

- 78: Biegesteg
- 79: Biegefeder, verstärkt

- 81: Fuß des Biegebalkens

- 85: Adapterelement
- 86: Biegesteg
- 87: Aussparung

- 90: Reibgehemme
- 91: Einstellschraube
- 92: Schiebekeil
- 93: Keilfläche
- 94: Stützfläche
- 95: Käfig
- 96: Druckstück

- 98: Rückhubring, elastisch
- 99: Mittelebene

- 101: Stift
- 102: Stift

## Patentansprüche

1. Elastische Lagerung einer Brems- und Klemmeinrichtung zur Anbringung an einem mittels einer Führungsschiene geführten Schlittens, wobei die Brems- und Klemmeinrichtung die Führungsschiene mittels in einem am Schlitten gelagerten Gehäuse angeordneten an der Führungsschiene anpressbaren Reibbacken umgreift, **dadurch gekennzeichnet,**
- **dass** die elastische Lagerung ein am Schlitten starr montierbares Lagerelement (61-66) und mindestens ein elastisches am Gehäuse (10; 18, 19) der Brems- und Klemmeinrichtung montierbares Gelenkelement (71-77) umfasst,
- **dass** das oder die Gelenkelemente (71-77) am Lagerelement (61-66) ohne Trennfuge angeordnet ist oder sind,
- **dass** das jeweilige Gelenkelement (71-77) ein Biegebalken ist,
- **dass** das jeweilige Gelenkelement (71-77) zur Richtung der Schlittenbewegung (2) parallel oder in spitzen Winkel ausgerichtet ist und
- **dass** der Freiheitsgrad des oder der Gelenkelemente (71-77) zumindest annähernd quer zur Richtung der Schlittenbewegung (2) und quer zu einer vertikalen Mittelebene (3) orientiert ist.

2. Elastische Lagerung gemäß Anspruch 1, **dadurch gekennzeichnet, dass** das einzelne Gelenkelement (71-77) einen rechteckigen Querschnitt hat, wobei seine größte Querschnittsausdehnung quer zu der Ebene verläuft, die die neutrale Biegefaser während eines Biegezyklusses aufspannt.

3. Elastische Lagerung gemäß Anspruch 1, **dadurch gekennzeichnet, dass** der gehäuseseitige Fuß (81) des jeweiligen Gelenkelements (71-77) vor oder hinter der Mittelebene (99) des Reibgehemmes (90) - um mindestens die halbe Reibbackenlänge in Führungslängsrichtung (2) versetzt - liegt.

4. Elastische Lagerung gemäß Anspruch 1, **dadurch gekennzeichnet, dass** auf der Oberfläche (13) des Gehäuses (10), die dem tragenden Schlitten zugewandt ist, mindestens eine plane Erhebung (16) angeordnet ist, die bei unbelasteter montierter Brems- und/oder Klemmvorrichtung am tragenden Schlitten anliegt.

5. Elastische Lagerung gemäß Anspruch 4, **dadurch gekennzeichnet, dass** die Erhebungen (16) aufgeklebte Teflonfilme oder - platten sind.
